# EUROPEAN PATENT APPLICATION

(11) **EP 4 194 733 A1**
(43) Date of publication of application: **14.06.2023**
(21) Application number: 21213848.1
(22) Date of filing: 10.12.2021
(51) Int. Cl.: F16L 21/02

(54) **A CONNECTION SYSTEM**

(71) Applicant: Valeo Autosystemy SP. Z.O.O., 32-050 Skawina (PL)
(72) Inventor: FICEK, Natalia Sabina, 32 050 Skawina (PL); WOZEK, Mateusz, 32 050 Skawina (PL); AUGUSTYN, Milosz, 32 050 Skawina (PL)
(74) Representative: Valeo Systèmes Thermiques

(57) **Abstract**

A connection system (100) includes a first block (10) and a second block (20). The first block (10) includes at least one first channel (12) and the second block (20) includes at least one, second channel (24). The second channel (24) corresponds to and in conjunction with the first channel (12) forms a passage (30) so that fluidal communication between the first block (10) and the second block (20) is provided. The connection system (100) further includes at least one positioning means (40) disposed symmetrically with respect to the passage (30) to immobilize the first block (10) with respect to the second block (20).

## Description

### FIELD OF THE INVENTION

The present invention relates to a connection system, more particularly, the present invention relates to a connection system for a condenser-receiver drier assembly of a vehicle air conditioning system.

### BACKGROUND OF THE INVENTION

A conventional air conditioning system for example for a vehicle includes a condenser, an evaporator, an expansion device, a compressor and a heater. The conventional air conditioning system configured with expansion valves is configured with a receiver drier that is disposed in the high-pressure section of the air conditioning system, usually located between condenser and expansion valve in the air conditioning loop. The receiver drier is in form of an air-tight container of a tubular configuration with an inlet for receiving liquid refrigerant from a condenser and an outlet.

Due to space constrains in the vehicle environment, the receiver drier is generally mounted on the condenser. The receiver drier acts as a temporary storage for refrigerant (and oil). The receiver drier receives a desiccant material to absorb moisture (water) from the liquid refrigerant received therein from the condenser that may have entered inside the air conditioning system. The receiver drier also includes a filter to trap debris from the liquid refrigerant received therein from the condenser that may have entered inside the air conditioning system. Specifically, due to functional association with the condenser and space constraints in vehicular environment, the receiver drier is mounted on and is in fluid communication with the condenser. More specifically, the receiver drier is mounted on and is in fluid communication with an outlet manifold of the condenser that receives liquid refrigerant from the condenser.

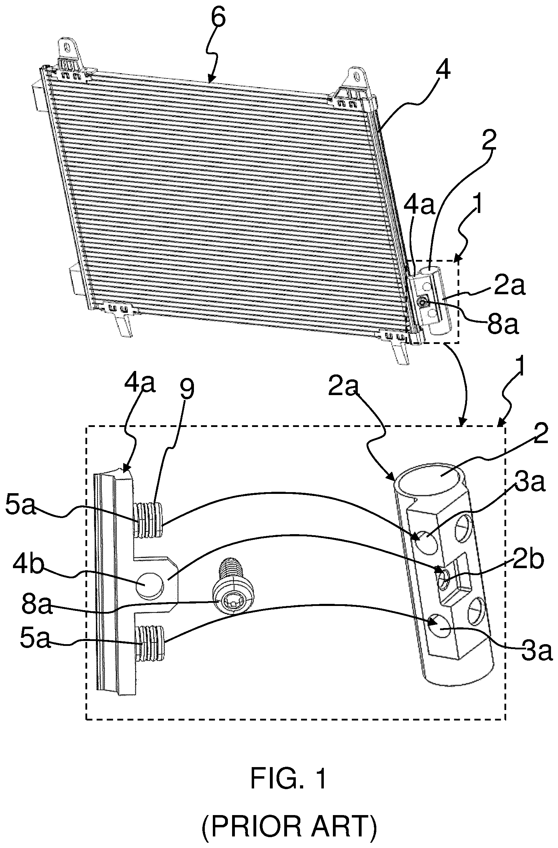

Referring to the FIG. 1 of the accompanying drawings, a conventional connection system 1 for mounting a receiver drier 2 on a manifold 4 of a condenser 6 and configuring fluid communication between the receiver drier 2 and the manifold 4 is illustrated. The connection system 1 includes a first block 4a formed on the manifold 4 and a second block 2a formed on the receiver drier 2. FIG. 1 also illustrates enlarged view of the first block 4a and the second block 2a of the connection system 1. The first block 4a includes male fluid connectors 5a that are received in the corresponding female fluid connectors 3a formed on the second block 2a to configure fluid communication between the receiver drier 2 and the manifold 4. The first block 4a and the second block 2a are secured to each other by means of a fastener 8, particularly a threaded screw 8a passes through aligned threaded holes 4b and 2b formed in the first block 4a and the second block 2a to configure threaded connection between the first block 4a and the second block 2a.

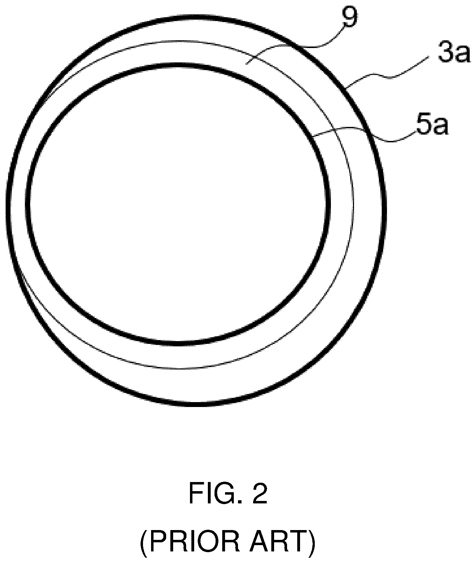

However, the male fluid connector 5a radially moves within the corresponding female fluid connector 3a such that at least a portion of the periphery of the male fluid connector 5a is disposed away from inside wall of the female fluid connecter 3a as the fastener 8 is deployed within the aligned holes 4b and 2b of the first block 4a and the second block 2a respectively for configuring secure threaded connection there between. More specifically, at least a portion of the male fluid connector 5a distal from the fastener head in the direction of advance of the fastener 8 moves relative the corresponding portion of the female fluid connector 3a as illustrated in FIG. 2 as the fastener is deployed. The relative movement of the male fluid connector 5a inside the female fluid 3a due to deployment of the fastener 8 causes non uniform annular spacing between the male fluid connector 5a and the female fluid connector 3a and unsymmetrical compression of the sealing element 9 disposed in the annular space between the male fluid connector 5a and the female fluid connector 3a. The unsymmetrical compression of the sealing element 9 causes loose connection between the male fluid connector 5a and the corresponding female fluid connector 3a and causes leakage of the refrigerant through the connection system 1. Accordingly, the efficiency and performance of the condenser and the receiver drier is reduced. Further, the connection system 1 faces the problem of rubber migration resulting in reduced service life of the sealing element and frequent maintenance.

Accordingly, there is a need for a connection system and a condenser-receiver drier assembly configured with the connection system that configures secure and leak-proof connection between a condenser and a receiver drier of the condenser-receiver drier assembly. More specifically, there is a need for a connection system that ensures uniform annular gap between male fluid connector and corresponding female fluid connector of respective first and second block of the connection system, thereby ensuring symmetrical compression of a sealing element disposed in the annular gap between the male fluid connector and the corresponding female fluid connector. Further, there is a need for a connection system that addresses the problem of rubber migration faced in the conventional connection system and enhances reliability and service life of the sealing elements of the connection system, thereby reducing maintenance and maintenance costs associated with the condenser-receiver drier assembly.

An object of the present invention is to provide a connection system and condenser-receiver drier assembly configured with the connection system that obviates the drawbacks associated with non-uniform annular space between male fluid connector and corresponding connection holes of the conventional connection system.

Another object of the present invention is to provide a connection system and a condenser-receiver drier assembly configured with the connection system that configures secure and leak-proof connection between a condenser and a receiver drier of the condenser-receiver drier assembly.

Yet another object of the present invention is to provide a connection system and a condenser-receiver drier assembly configured with the connection system that ensures uniform annular gap between male fluid connector and corresponding female fluid connector of the respective first and second block of the connection system.

Still another object of the present invention is to provide a connection system and a condenser-receiver drier assembly configured with the connection system that ensures symmetrical compression of a sealing element disposed in the annular gap between the male fluid connector and the corresponding female fluid connector.

Another object of the present invention is to provide a connection system and a condenser-receiver drier assembly configured with the connection system that addresses the problem of rubber migration faced in the conventional connection system.

Yet another object of the present invention is to provide a connection system and a condenser-receiver drier assembly configured with the connection system that enhances reliability and service life of the sealing elements of the connection system.

Still another object of the present invention is to provide a connection system and a condenser-receiver drier assembly configured with the connection system that requires comparatively less maintenance and involves comparatively less maintenance costs associated with the condenser-receiver drier assembly than the conventional condenser-receiver drier assembly.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### SUMMARY OF THE INVENTION

A connection system is disclosed in accordance with an embodiment of the present invention. The connection system includes a first block and a second block. The first block includes at least one first channel and the second block includes at least one second channel. The second channel corresponding to and in conjunction with the first channel forms a passage so that fluid communication between the first block and the second block is provided. The connection system included at least one positioning means disposed symmetrically with respect to the passage to immobilize the first block with respect to the second block.

Generally, the at least one first channel is formed by at least one pair of hollow mating male fluid connector and the at least one second channel is formed by at least one corresponding hollow female fluid connector that is receivable in the hollow male fluid connector.

Preferably, the first block includes the male fluid connector and the second block includes the corresponding hollow female fluid connector.

Alternatively, the first block includes hollow female fluid connector and the second block includes the corresponding male fluid connector.

Particularly, each male fluid connector includes at least one groove configured along periphery thereof and the at least one sealing element received in the corresponding groove.

Generally, the first block and the second block includes at least one of a threaded hole and a hole, the threaded hole is aligned with the corresponding hole to receive a screw and configure threaded connection between the first block and the second block.

Specifically, the first block includes a bracket configured with the hole and the second block is configured with cutout formed with the threaded hole.

Alternatively, the second block includes a bracket configured with the hole and the first block is configured with cutout formed with the threaded hole.

Generally, the threaded hole extends orthogonally to the hollow female fluid connector.

In accordance with an embodiment of the present invention, the positioning means includes complimentary positioning elements disposed proximal to and symmetrical to the male fluid connector.

Generally, the positioning means includes at least two pair of mating engaging elements corresponding to one pair of mating male fluid connector and the corresponding hollow female fluid connector. Each pair of the mating engaging elements disposed on opposite sides of the pair of male fluid connector and corresponding hollow female fluid connector.

Preferably, there are two pairs of mating male fluid connector and the corresponding hollow female fluid connector. Also there are at least two pairs of mating engaging elements, each pair of mating engaging elements symmetrically disposed on opposite sides of the two pair of mating male fluid connector and corresponding hollow female fluid connector.

Preferably, the complimentary positioning elements are positioning pins configured on the first block and received in corresponding positioning holes formed on the second block.

More specifically, the positioning pins formed on the first block extend parallel to the male fluid connector.

Alternatively, the complimentary positioning elements are positioning holes configured on the first block that receive the corresponding positioning pins formed on the second block.

Specifically, the positioning pins formed on the second block extend parallel to the hollow female fluid connector.

A condenser-receiver drier assembly is disclosed in accordance with an embodiment of the present invention. The condenser-receiver drier assembly includes a condenser, a receiver drier and the connection system. The condenser includes a heat exchanger core and at least one manifold. The heat exchanger core includes a plurality of heat exchange tubes. The at least one manifold delivers and collects heat exchange fluid to configure heat exchange fluid flow across the heat exchange tubes. The connection system as disclosed above mounts the receiver drier over the manifold and configures fluid communication there-between.

Generallly, the manifold is formed with the first block secured to the second block connected to the receiver drier to mount the receiver drier on the manifold and configure fluid communication between the manifold and the receiver drier.

### BRIEF DESCRIPTION OF DRAWINGS

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates an isometric view of a condenser-receiver drier assembly configured with a conventional connection system, also is illustrated a first block and second block of the conventional connection system in un-assembled configuration;
FIG. 2 illustrates non-uniform annular spacing between a male fluid connector and a hollow female fluid connector and unsymmetrical compression of a sealing element in case of the conventional connection system of FIG. 1;
Fig 3 illustrates an isometric view of a condenser-receiver drier assembly configured with a connection system in accordance with an embodiment of the present invention, also is illustrated a first block and second block of the connection system of the present invention in un-assembled configuration;
FIG. 4 illustrates uniform annular spacing between a hollow male fluid connector and a hollow female fluid connector and symmetrical compression of a sealing element in case of the connection system of FIG. 3;
Fig. 5 illustrates an assembled view of the condenser-receiver drier assembly of Fig. 3;
Fig. 6 illustrates an exploded view of the condenser-receiver drier assembly of Fig. 5;
Fig. 7 illustrates an isometric view of a first block of the connection system of the Fig.5;
Fig. 8 illustrates an isometric view of a second block of the connection system of Fig. 5; and
FIG. 9 illustrates an isometric view of a condenser-receiver drier assembly configured with a connection system in accordance with a yet another embodiment of the present invention, also is illustrated exploded view of an assembly between a first block and second block of the connection system;

It must be noted that the figures disclose the invention in a detailed enough way to be implemented, said figures helping to better define the invention if needs be. The invention should however not be limited to the embodiment disclosed in the description.

### DETAILED DESCRIPTION OF EMBODIMENTS

Although, the present invention is described with example of a connection system for use in condenser-receiver drier assembly of a vehicle air conditioning system, wherein the connection system includes a first block and a second block. The first block includes at least one first channel and the second block includes at least one second channel. The at least one second channel corresponds to and in conjunction with the at least one first channel configures at least one passage for fluid communication between the first block and the second block. The at least one first channel is formed by at least one hollow male fluid connector and the at least one second channel is formed by at least one hollow female fluid connector that receives the corresponding hollow male fluid connector. The first block and the second block are secured to each other by means of a fastener. The first block and the second block includes complimentary positioning elements symmetrically disposed with respect to the passage to prevent relative movement between the male fluid connector and the corresponding female fluid connector receiving the male fluid connector as the fastener is deployed to configure connection between the first block and the second block. With such configuration of the connection system, uniform annular gap between the male fluid connector and the corresponding female fluid connector receiving the male fluid connector is achieved as the fastener is deployed to configure connection between the first block and the second block. Accordingly, symmetric compression of respective sealing elements disposed in the annular gap between the male fluid connector and the corresponding female fluid connector is achieved. However, the present invention is not limited to a connection system for mounting a receiver drier on a manifold of a condenser and configuring fluid connection there-between. The connection system of the present invention is also applicable where secure mounting of one component on another, configuring leak-proof fluid communication between the components used in vehicular and non-vehicular applications and improved service life of sealing element is required.

Fig.1 illustrates an isometric view of a condenser-receiver drier assembly configured with a conventional connection system 1. The conventional connection system 1 includes a first block 4a and a second block 2a. The first block 4a is formed with the hollow male fluid connectors 5a and the second block 2a is formed with the hollow female fluid connectors 3a that receive the corresponding male fluid connectors 5a. The first block 4a and the second block 2a include through holes 4b and threaded holes 2b respectively that are aligned to allow passage of a threaded bolt 8a to configure threaded connection between the first block 4a and the second block 2a. However, the deployment of the bolt 8a causes relative movement between the male fluid connector 5a and the corresponding female fluid connector 3a receiving the male fluid connector 5a. The relative movement of the male fluid connector 5a inside the female fluid connector 3a due to deployment of the fastener 8a causes non-uniform annular spacing between the male fluid connector 5a and the female fluid connector 3a as illustrated in FIG. 2. The relative movement of the male fluid connector 5a inside the female fluid connector 3a further cause unsymmetrical compression of the sealing element 9 disposed in the annular space between the male fluid connector 5a and the female fluid connector 3a. The unsymmetrical compression of the sealing element 9 causes loose connection between the male fluid connector 5a and the corresponding female fluid connector 3a that causes leakage of the refrigerant through the connection system 1. Accordingly, the efficiency and performance of the condenser is reduced. Further, the connection system 1 faces the problem of rubber migration resulting in reduced service life of the sealing element and frequent maintenance.

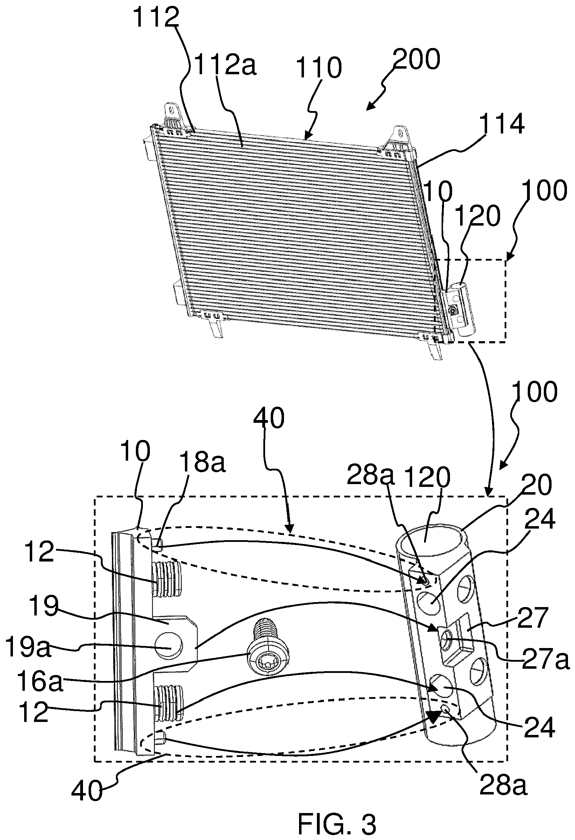

In order to address the problems arising due to non-uniform annular space between a male fluid connector and a corresponding female fluid connector receiving the male fluid connector of the conventional connection system, the present invention envisages a connection system. Fig. 3 illustrates an isometric view of a condenser-receiver drier assembly 200 configured with a connection system 100 for configuring connection and fluid communication between a first block 10 and a second block 20. Generally, the first block 10 includes at least one first channel 12 and the second block 20 includes at least one second channel 24. The at least one second channel 24 corresponds to and in conjunction with the at least one first channel 12 forms a passage 30 that provides fluid communication between the first block 10 and the second block 20. Particularly, the first block 10 is formed with hollow male fluid connectors 12, hereinafter, simply referred to as "male fluid connectors 12" and the second block 20 is formed with hollow female fluid connectors 24, hereinafter simply referred to as "female fluid connectors 24" that receives the corresponding male fluid connectors 12. The connection system 100 further includes at least one positioning means 40 disposed symmetrically with respect to the passage 30 to immobilize the first block 10 with respect to the second block 20, more specifically to immobilize the male fluid connectors 12 with respect to the female fluid connectors 24. The connection system 100 of the present invention ensures uniform annular space between the male fluid connectors 12 and the corresponding female fluid connectors 24 by preventing relative movement between the male fluid connectors 12 and the corresponding female fluid connectors 24 as a screw 16 is deployed for forming threaded connection between the first block 10 and the second block 20. Accordingly, all the problems such as ineffective sealing, leakage, rubber migration, reduced service life of the sealing element caused due to non-uniform annular spacing between the male fluid connector and the female fluid connector are addressed.

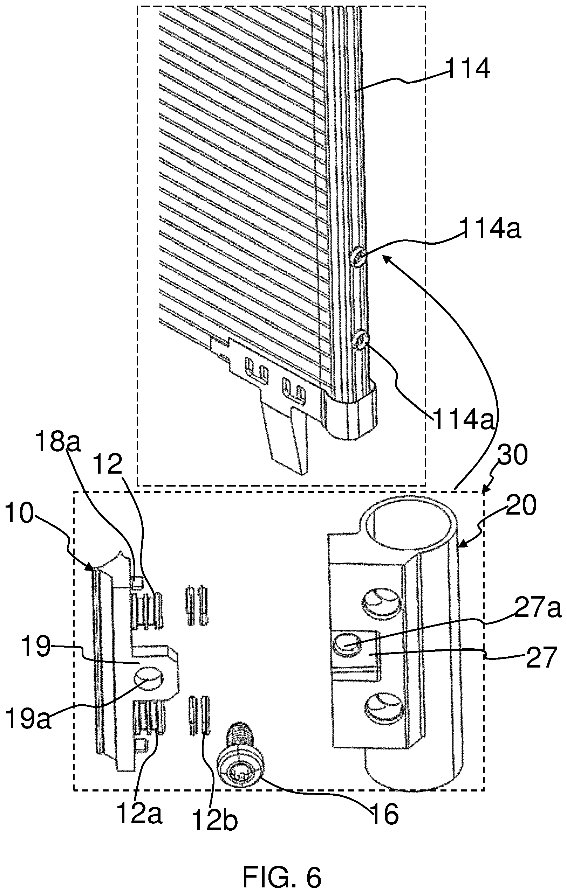

Referring to the FIG. 3, the connection system 100 forms connection between the first block 10 and the second block 20 such that there is fluid communication between the first block 10 and the second block 20. Further, the first block 10 and the second block 20 are secured to each other by means of the screw 16. Specifically, the first block 10 includes at least one first channel 12 and the second block 20 includes at least one second channel 24, wherein the second channel 24 corresponds to and in conjunction with the first channel 12 forms at least one passage 30 to configure fluid communication between the first block 10 and the second block 20. The first block 10 is connected to and in fluid communication with an outlet manifold 114 via connecting holes 114a (illustrated in FIG. 6) formed on the outlet manifold 114. The second block is connected to and in fluid communication with a receiver drier 120. Accordingly, the at least one passage 30 configures fluid communication between the outlet manifold 114 and the receiver drier 120 and the screw 16 configures connection between the first block 10 and the second block 20, thereby configuring connection between the outlet manifold 114and the receiver drier 120 via the connection system 100. Particularly, the connection system 100 includes at least one pair of mating male fluid connector 12, 22 and corresponding female fluid connector 24, 14. The first block 10 includes the male fluid connector 12 and the second block 20 includes the corresponding female fluid connector 24. Preferably, the first block 10 includes two male fluid connectors 12 and the second block includes two female fluid connectors 24 corresponding to the two male fluid connectors 12.

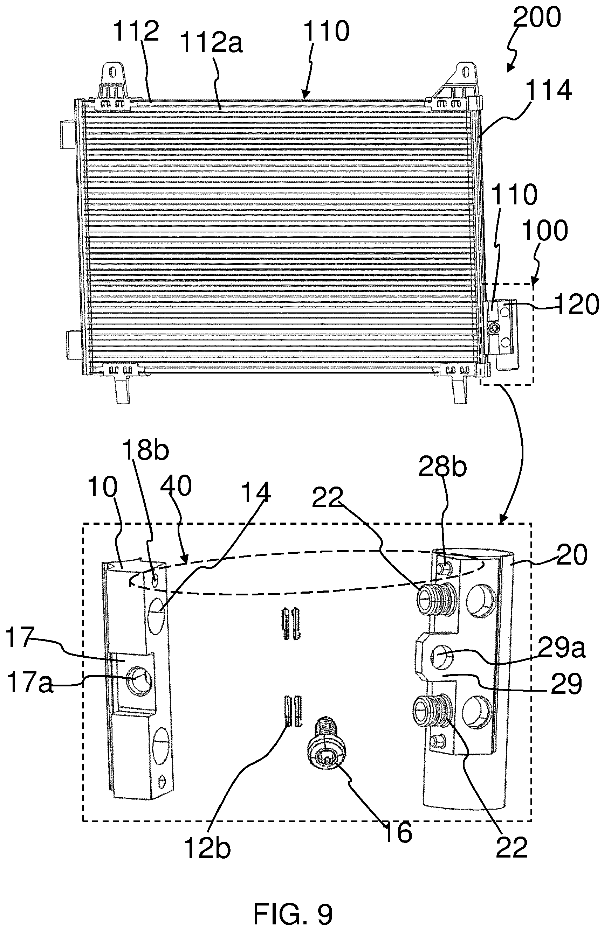

Further, the first block 10 and the second block 20 includes at least one of a hole 19a, 29a and a threaded hole 27a, 17a . Generally, the threaded hole 27a, 17a is aligned with the corresponding hole 19a, 29a to receive the screw 16 and configure threaded connection between the first block 10 and the second block 20. More specifically, referring to FiG. 3, the threaded hole 27a formed on the second block 20 is aligned with the hole 19a formed on the first block 10 to receive the screw 16 to configure threaded connection between the first block 10 and the second block 20. Generally, the first block 10 includes a bracket 19 configured with the hole 19a and the second block 20 is configured with a corresponding cutout 27 formed with the threaded hole 27a. The cutout 27 is capable of receiving the bracket 19 therein such that the hole 19a formed on the bracket 19 is aligned to the corresponding threaded hole 27a formed on the cutout 27. Alternatively as illustrated in FIG. 9, the second block 20 includes a bracket 29 configured with the hole 29a and the first block 10 is configured with cutout 17 formed with the threaded hole 17a. In accordance with an embodiment of the present invention illustrated in FIG. 3, the threaded hole 27a extends orthogonally to the female fluid connector 24. Alternatively as illustrated in FIG. 9, the threaded hole 17a extends orthogonally to the female fluid connector 14. However, the present invention is not limited to any particular configuration, placement and number of the holes and corresponding threaded holes configured on the first block and the second block respectively and whether the threaded hole is configured on the first block or the second block as long as the threaded hole and the corresponding hole forms secure threaded connection between the first block and the second block.

In case of the conventional connection system, such threaded connection between the first block and the second block cause the male fluid connector to move within the female fluid connector. Particularly, the male fluid connector is pushed close to the female fluid connector on one side and pushed away from the female fluid connector on the opposite side, thereby causing unsymmetrical annular gap between the male fluid connector and the female fluid connector as illustrated in the FIG. 2. Such non-uniform annular spacing between the male fluid connector and the female fluid connector cause various problems such as rubber migration and ineffective sealing between the male and female fluid connectors, thereby causing leakage. Such non-uniform annular spacing between the male fluid connector and the female fluid connector may also cause pinching of the sealing element and damage thereto.

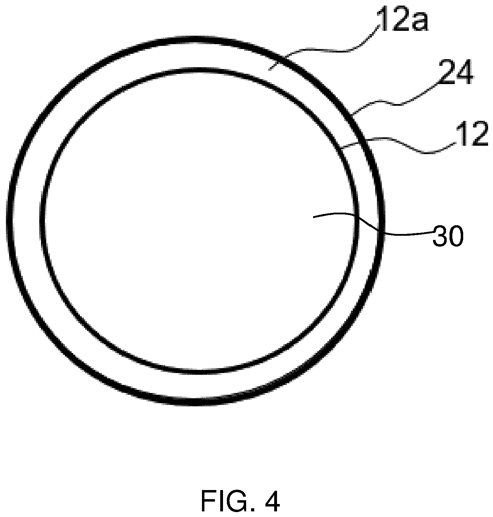

The connection system 100 of the present invention addresses the problems arising from non-uniform annular spacing between the mating male fluid connector 12 and corresponding female fluid connector 24 by providing corresponding positioning means 40. The positioning means 40 includes positioning pins 18a and corresponding positioning holes 28a that receive the positioning pins 18a. The positioning means 40 is symmetrically disposed with respect to the at least one passage 30 formed by engagement between the male fluid connector 12 and the corresponding female fluid connector 24, to prevent relative movement between the mating male fluid connector 12 and the corresponding female fluid connector 24. By symmetrically disposed, it is meant that the center of the positioning means 40 is along the same line as is the center of the passage 30 configured by the engaging male fluid connector 12 and female fluid connector 24. With such configuration uniform annular spacing and symmetrical compression of the sealing element between the male fluid connector 12, 22 and the female fluid connector 24, 14 is achieved. FIG. 4 illustrates uniform annular spacing between the male fluid connector 12 and the female fluid connector 24 and symmetrical compression of the sealing element 12b received in the groove 12a between the male fluid connector 12 and the female fluid connector 24, achieved because of the connection system 100 of the present invention.

Preferably, the male fluid connector 12 is in the form of a hollow cylinder, whereas the female fluid connector 24 is in the form of a hole that can receive the male fluid connector 12 as illustrated in FIG. 3. Specifically, each male fluid connector 12 in the form of hollow cylinder includes at least one groove 12a and at least one sealing element 12b received in the groove 12a. The at least one groove 12a is configured along periphery of the male fluid connector 12 and the at least one sealing element 12b is received in the corresponding groove 12a. Each female fluid connector 24 in the form of the hole is having internal dimension larger than outside dimension of the corresponding male fluid connector 12 in the form of the hollow cylinder and is capable of receiving the male fluid connector 12 to define a passage 30. Accordingly, there are chances of relative movement of the male fluid connector 14 received inside the female fluid connector 24 with respect to the female fluid connector 24. However, the connection system 100 of the present invention uses positioning means 40 symmetrically disposed with respect to passage 30 formed through the engaging male fluid connector 12 and the female fluid connector 24 to prevent relative movement between male fluid connector 12 and the female fluid connector 24 as the screw 16 is deployed to configure threaded connection between the first block 10 and the second block 20. The positioning means 40 is described in further detail in the forthcoming section of the specification. The spacing between the two female fluid connectors 24 is same as the spacing between the two male fluid connectors 12.

Instead of the first block 10 formed with the male fluid connector 12 and the second block 20 formed with the female fluid connector 24, the first block 10 includes the female fluid connector 14 in the form of hole and the second block 20 includes the corresponding male fluid connector 22 in the form of hollow cylinder as illustrated in FIG. 9. However, the present invention is not limited to any particular configuration of the mating male fluid connector 12, 22 and the female fluid connector 24, 14 and whether the male fluid connector is formed on the first block 10 or the second block 20 as far as the male fluid connector 12 is capable of being received in the female fluid connector 24 to configure fluid communication across the connection through the passage 30 formed by engagement of the male fluid connector and the female fluid connector.

More specifically, the first block 10 is mounted on and in fluid communication with the outlet manifold 114 of a condenser 110 via the connecting holes 114a formed on the outlet manifold 114. In accordance with one embodiment, the first block 10 is integrally formed with the outlet manifold 114 of the condenser 110. Alternatively, the first block 10 is separate from and connected to the outlet manifold 114 of the condenser 110. The second block 20 is connected to and is in fluid communication with the receiver drier 120. In accordance with one embodiment, the second block 20 is integrally formed with the receiver drier 120. Alternatively, the second block 20 is separate from and connected to the receiver drier 120. Accordingly, the connection system 100 in assembled and operative configuration thereof configures connection and fluid communication between the condenser 110 and the receiver drier 120.

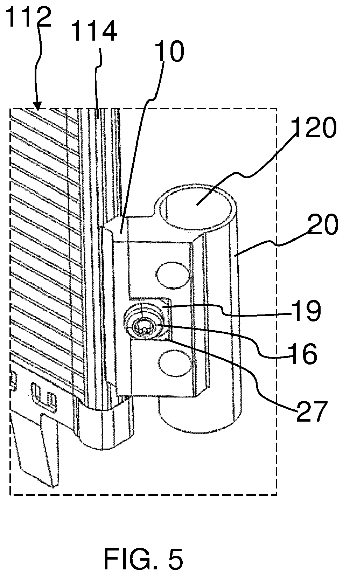

The first block 10 and the second block 20 includes corresponding positioning means 40 symmetrically disposed with respect to the passage 30 defined by engagement of the male fluid connector 12 and corresponding female fluid connector 24 to prevent relative movement between male fluid connector 12 and the female fluid connector 24 as the screw 16 is deployed to configure threaded connection between the first block 10 formed with male fluid connector 12 and the second block 20 formed with female fluid connector 24. More specifically, the positioning means 40 prevents relative movement between the male fluid connector 12 and the corresponding female fluid connector 24 when the first block 10 and the second block 20 are connected to each other using the screw 16. Generally, the positioning means 40 includes complimentary positioning elements 18 and 28 disposed proximal to the male fluid connector 12, 22 and the female fluid connector 24, 14 respectively. The positioning means 40 includes at least two pair of mating positioning elements 18, 28 corresponding to one pair of mating male fluid connector 12, 22 and the corresponding female fluid connector 24, 14. Each pair of the mating positioning elements 18, 28 is disposed on opposite sides of the pair of mating male fluid connector 12, 22 and corresponding female fluid connector 24, 14. In case there is a single male fluid connector 12 received in the corresponding female fluid connector 24, there are provided two pair of mating positioning elements, each pair of mating positioning elements 18a and 28a on opposite sides of the mating male fluid connector 12 and the female fluid connector 24. In a preferred embodiment illustrated in the FIG. 5 and FIG. 6, there are two pairs of engaging male and female fluid connectors, the first pair of mating male fluid connector 12 and the corresponding female fluid connector 24 is disposed on the first side and the second pair of male fluid connector 12 and the corresponding female fluid connector 24 is disposed on the second side. Also, there is one pair of mating positioning elements 18a and 28a corresponding to and symmetrically disposed with respect to the first pair of mating male fluid connector 12 and the corresponding female fluid connector 24. Further, there is another pair of mating positioning elements 18a and 28a corresponding to and symmetrically disposed with respect to the second pair of mating male fluid connector 12 and the corresponding female fluid connector 24. In case there are two pair of engaging male and female fluid connectors, there is one pair of mating positioning elements 18a and 28a corresponding to each pair of engaging male and female fluid connectors.

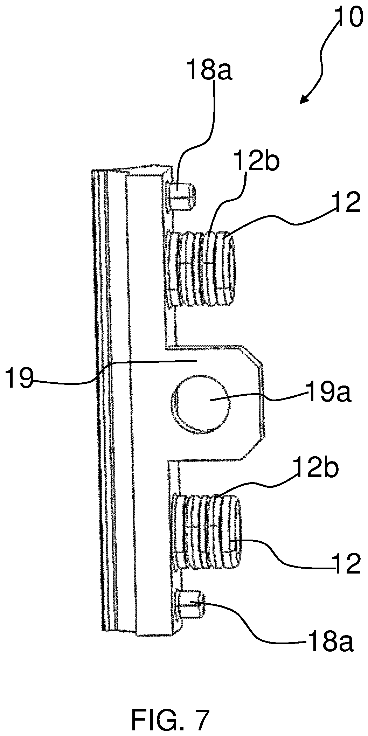

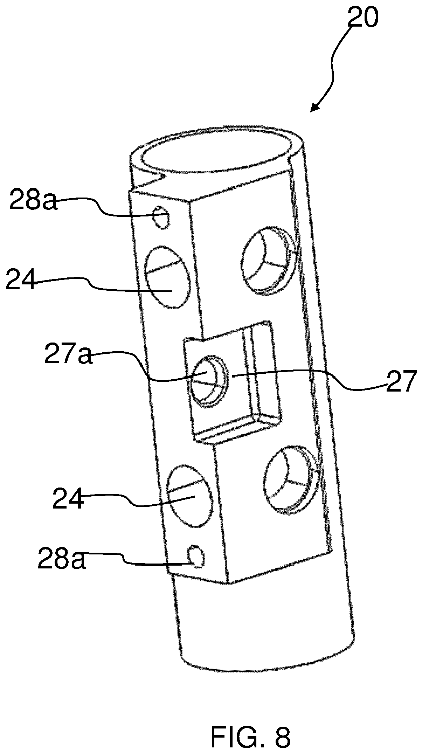

Generally, the complimentary positioning elements 18, 28 are positioning pins 18a configured on the first block 10 and are received in corresponding positioning holes 28a formed on the second block 20 as illustrated in FIG. 3. Referring to the FIG. 8, the positioning holes 28a are on the same plane on which the female fluid connector 24 are formed. Referring to the FIG. 7, the positioning pins 18a formed on the first block 10 orthogonally extend parallel to the male fluid connector 12, 22 and away from the first block 10. Referring to FIG. 8, the positioning holes 28a formed on the second block 20 extend parallel to the female fluid connector 24, 14. The positioning holes 28a are so sized to securely receive the corresponding positioning pins 18a.

Alternatively, the complimentary positioning elements 18, 28 are positioning holes 18b configured on the first block 10 that receive the corresponding positioning pins 28b formed on the second block 20 as illustrated in FIG. 9. In such configuration, the positioning pins 28b formed on the second block 20 orthogonally extend parallel to the channel 30 defined by the engagement between the male fluid connector 22 formed on the second block 20 and the female fluid connector 14 formed on the first block 10, and away from the second block 20. The positioning holes 18b are so sized to securely receive the corresponding positioning pins 28b.

Also is disclosed a condenser-receiver drier assembly 200 in accordance with an embodiment of the present invention. The condenser-receiver drier assembly 200 includes the condenser 110, the receiver drier 120 and the connection system 100 as disclosed above. The condenser 110 includes a heat exchanger core 112 and at least one manifold 114. The heat exchanger core 112 includes heat exchange tubes 112a separated by fins 112b. The manifold 114 delivers and collects heat exchange fluid, particularly, refrigerant to configure fluid flow across the heat exchange tubes 112a, resulting in condensation of the refrigerant and heat rejection from the refrigerant in the process. The receiver drier 120 includes a filter and desiccant bag. The filter removes the debris from the condensed refrigerant received from the condenser 110 and the desiccant bag removes moisture carried in the refrigerant. The connection system 100 as disclosed above mounts the receiver drier 120 over the manifold 114 and configures fluid communication there-between.

More specifically, the manifold 114 of the condenser-receiver drier assembly 200 as disclosed above is formed with and is in fluid communication with the first block 10. The first block 10 is secured to and fluid communication with the second block 20 via the connection system 100 as disclosed above. The second block 20 is connected to and fluid communication with the receiver drier 120 to mount the receiver drier 120 on the manifold 114 and configure fluid communication between the manifold 114 and the receiver drier 120.

In any case, the invention cannot and should not be limited to the embodiments specifically described in this document, as other embodiments might exist. The invention shall spread to any equivalent means and any technically operating combination of means.

## Claims

1. A connection system (100) comprising:
• a first block (10) comprising at least one first channel (12);
• a second block (20) comprising at least one second channel (24), wherein the second channel (24) corresponds to and in conjunction with the first channel (12) forms at least one passage (30) so that the fluidal communication between the first block (10) and the second block (20) is provided,
**characterized in that** the connection system (100) comprises at least one positioning means (40) disposed symmetrically with respect to the passage 30 to immobilize the first block (10) with respect to the second block (20).

2. The connection system (100) as claimed in the previous claim, wherein the at least one first channel (12) is formed by at least one pair of hollow mating male fluid connector (12, 22) and the at least one second channel (24) is formed by at least one corresponding hollow female fluid connector (24, 14) receivable in the hollow male fluid connector (12, 22).

3. The connection system (100) as claimed in the previous claim, wherein the first block (10) comprises the hollow male fluid connector (12) and the second block (20) comprises the corresponding hollow female fluid connector (24).

4. The connection system (100) as claimed in the claim 2, wherein the first block (10) comprises the hollow female fluid connector (14) and the second block (20) comprises the corresponding hollow male fluid connector (22).

5. The connection system (100) as claimed in any of the claim 2, wherein each hollow male fluid connector (12, 22) comprising:
• at least one groove (12a, 22a) configured along periphery thereof; and
• at least one sealing element (12b, 22b) adapted to be received in the corresponding groove (12a, 22a).

6. The connection system (100) as claimed in claim 2, wherein the first block 10 and the second block 20 comprises at least one of a threaded hole (27a, 17a) and a hole (19a, 29a), the threaded hole (27a, 17a) adapted to be aligned with the corresponding hole (19a, 29a) to receive a screw (16) and configure threaded connection between the first block (10) and the second block (20).

7. The connection system (100) as claimed in the previous claim, wherein the first block (10) comprises a bracket (19) configured with the hole (19a) and the second block (20) is configured with cutout (27) formed with the threaded hole (27a).

8. The connection system (100) as claimed in the claim 6, wherein the second block (20) comprises a bracket (29) configured with the hole (29a) and the first block (10) is configured with cutout 17 formed with the threaded hole (17a).

9. The connection system (100) as claimed in claim 6, wherein the threaded hole (27a, 17a) extends orthogonally to the hollow female fluid connector (12, 22).

10. The connection system (100) as claimed in claim 2, wherein the positioning means (40) comprises complimentary positioning elements (18, 28) disposed proximal to the hollow male fluid connector (12, 22).

11. The connection system (100) as claimed in previous claim, wherein the positioning means (40) comprises at least two pair of mating engaging elements (18, 28) corresponding to one pair of mating male fluid connector (12, 22) and the corresponding female fluid connector (24, 14), each pair of mating engaging elements (18, 28) disposed on opposite sides of the pair of mating male fluid connector (12, 22) and corresponding female fluid connector (24, 14).

12. The connection system (100) as claimed in previous claim, wherein there are two pairs of mating male fluid connector (12, 22) and the corresponding female fluid connector (24, 14), also there are at least two pairs of mating engaging elements (18, 28), each pair of mating engaging elements (18, 28) symmetrically disposed on opposite sides of the two pair of mating male fluid connector (12, 22) and corresponding female fluid connector (24, 14).

13. The connection system (100) as claimed in claim 10, wherein the complimentary positioning elements (18, 28) are positioning pins (18a) configured on the first block (10) adapted to be received in corresponding positioning holes (28a) formed on the second block (20).

14. The connection system (100) as claimed in the previous claim, wherein the positioning pins (18a) formed on the first block (10) extend parallel to the male fluid connector (12, 22).

15. A condenser- receiver drier assembly (200) comprising:
• a condenser (110) comprising:
o a heat exchanger core (112) comprising heat exchange tubes (112a);
o at least one manifold (114) adapted to deliver and collect heat exchange fluid to configure heat exchange fluid flow across the heat exchange tubes (112a),
• a receiver drier (120); and
• the connection system (100) as claimed in any of the preceding claims adapted to mount the receiver drier (120) over the manifold (114) and configure fluid communication there-between.
